# EUROPEAN PATENT APPLICATION

(11) **EP 1 464 396 A1**
(43) Date of publication of application: **06.10.2004**
(21) Application number: 04100922.6
(22) Date of filing: 08.03.2004
(51) Int. Cl.: B01J 29/74, B01J 21/08, C10G 45/64

(54) **Process for preparing a lubricating base oil and a gas oil**

(30) Priority: 10.03.2003 EP 32905887
(71) Applicant: SHELL INTERNATIONALE RESEARCH MAATSCHAPPIJ B.V., 2596 HR Den Haag (NL)
(72) Inventor: ADAMS, Nicholas James, 76650, Petit-Couronne (FR)

(57) **Abstract**

Process for preparing a lubricating base oil and a gas oil by contacting, under catalytic dewaxing conditions, a petroleum derived wax with a catalyst composition comprising at least a hydrogenation component, a binder and zeolite crystallites having pores consisting of 12 oxygen atoms, wherein the zeolite crystallites have a constrain index (CI) larger than 1 and wherein from the effluent of the process a base oil fraction and a gas oil fraction is isolated and wherein the gas oil yield is larger than the yield to the fraction boiling below the gas oil fraction.

## Description

The invention relates to a process for preparing a lubricating base oil and a gas oil by contacting, under catalytic dewaxing conditions, a waxy feed with a catalyst composition comprising at least a hydrogenation component, a binder and zeolite crystallites.

A process to prepare a base oil is described in US-A-5885438. This publication discloses a process to prepare base oils by subjecting a slack wax to a mild hydrocracking step over NiW/fluorided alumina catalyst, subsequently contacting the wax containing effluent in the presence of hydrogen and a catalyst consisting of platinum, 65 wt% zeolite beta and 35 wt% silica binder. The effluent thus obtained was solvent dewaxed to achieve the required pour point. Zeolite beta has pores consisting of 12 oxygen atoms and has a constraint index (CI) as determined at 316 °C of 0.6. According to this publication Constrain Index values of lower than 1 are preferred.

A disadvantage of this process is that besides the process step involving zeolite beta also two other process steps are required to arrive at the desired base oil.

WO-A-0029511 illustrates in its examples a process to prepare base oils from hydrocracked waxy raffinates containing 16.7 wt% wax by means of dewaxing using a silica bound-ZSM-12 containing catalyst.

In WO-A-9607715 petroleum waxes are converted to high VI lubricants by a synergistic process which employs two catalysts. The examples illustrate that an initially hydrocracked slack wax, containing 55 wt% wax is treated over an alumina bound PT/ZSM-23 catalyst.

A process, which claims to prepare base oils in one step from a slack wax, is disclosed in EP-A-536325. This publication illustrates the conversion of a slack wax in one step to a base oil having a low pour point using a catalyst consisting of molecular sieve such as ZSM-23 or ZSM-22, an alumina binder and platinum. The preferred zeolites according to this publication are intermediate pore size zeolites having a minor pore axis of between 4.2 and 4.8 Å and a major pore axis of between 5.4 and 7.0 Å.

A disadvantage of the process of EP-A-536325 is that when low pour points are desired the yield of base oils is not high.

The object of the present invention is to improve the process as disclosed in EP-A-536325.

This object is achieved with the following process. Process for preparing a lubricating base oil and a gas oil by contacting, under catalytic dewaxing conditions, a petroleum derived wax with a catalyst composition comprising at least a hydrogenation component, a binder and zeolite crystallites, wherein the zeolite has pores consisting of 12 oxygen atoms and has a constrain index (CI) larger than 1 and wherein from the effluent of the process a base oil fraction and a gas oil fraction is isolated and wherein the gas oil yield is larger than the yield to the fraction boiling below the gas oil fraction.

It has been found that the process according to the invention can prepare base oils starting from a waxy feed in a single process step and in a high yield. Furthermore the process yields more gas oil as a by-product and less gaseous by-products than when the state of the art process is used. It has been found that when also a gas oil fraction is isolated from the effluent of the process according the invention a yield to said gas oil product is obtained which is larger than the yield to the fraction boiling below the gas oil fraction. This is advantageous because gas oil is a valuable by-product. Furthermore the cold flow properties like cloud point and cold filter plugging point of the gas oil as obtained by this process are very good. A next advantage is that the process can be performed at a relatively low pressure.

Petroleum derived wax is defined as a wax obtained when processing a fraction of a crude petroleum source. A petroleum derived wax may for example be a slack wax or a foots oil. Slack wax can be obtained from either a hydrocracked lube oil or a solvent refined lube oil. Hydrocracking is preferred because that process can also reduce the nitrogen content to low values. With slack wax derived from solvent refined oils, de-oiling can be used to reduce the nitrogen content. The oil content of the slack wax feed may be between 0 and 50 wt%. Slack wax having a high oil content may be obtained as the direct by-product of a solvent dewaxing process. Foots oils are obtained as the oil fraction when de-oiling a wax feed to a very low oil content. The oil fraction separated from the wax is referred to as foots oil and may contain between 80 and 95 wt% wax. Examples of suitable solvent dewaxing processes are described in Lubricant Base Oil and Wax Processing, Avilino Sequeira, Jr, Marcel Dekker Inc., New York, 1994, Chapter 7. De-oiled slack waxes may also be used in the present invention and more preferably the oil content is between 0 and 20 wt%. The content of aromatic compounds is normally greater than 3 wt% and may be up to 40 wt% for the more heavier wax grades.

Preferably the organic nitrogen content of the feed is less than about 50 ppmw (parts per million by weight), more preferably less than about 10 ppmw. Particularly good results, in terms of activity and length of catalyst cycle (period between successive regenerations or start-up and first regeneration) are experienced when the feed contains less than about 10 ppmw of organic nitrogen. Suitable slack wax feeds containing low amounts of nitrogen are for example derived from solvent dewaxing a hydroprocessed base oil feedstock.

The catalyst composition comprises at least a hydrogenation component, a binder and zeolite crystallites, wherein the zeolite has pores consisting of 12 oxygen atoms and has a constrain index (CI) larger than 1. The method by which the CI value according to this invention is determined is described in US-A-4016218. It should be noted that Constraint Index seems to vary somewhat with severity of operations (conversion) and the presence or absence of binders. Likewise, other variables, such as crystal size of the zeolite, the presence of occluded contaminants, etc., may affect the Constraint Index. Therefore, it will be appreciated that it may be possible to so select test conditions, e.g. temperature, as to establish more than one value for the Constraint Index of a particular zeolite. This explains the range of Constraint Indices for some zeolites, such as ZSM-5, ZSM-11 and Beta. For the purposes of the present invention, a zeolite is considered to have a Constraint Index of larger than 1 if when tested at at least one temperature within the range of 550 °F (290 °C) to 950 °F (570 °C), it manifests a Constraint Index within the here specified ranges. The CI value is greater than 1, preferably greater than 1.5. The maximum value for the CI will be suitably smaller than 12 and preferably smaller than 7.

The zeolite used in the present invention is not a typical large pore zeolites such as zeolite beta (BEA type) or mordenite (MOR type) because typically such large pore zeolites have a CI value of less than 1. The three letter code describing the zeolite is according to the Structure Type Codes as defined by the IZA Structure Commission and described in detail in Zeolites 17:1-230, 1996 pages 5-12. Nor is the zeolite a typical medium pore zeolite because medium pore zeolites typically have pores consisting of 10 oxygen atoms as the largest pore opening. Such medium pore zeolites typically have a CI value larger than 1, for example ZSM-23 (MTT Type) having a CI value of 9.1.

More preferably the zeolite has 12 oxygen-ring defined pores, wherein the largest pore axis of these pores is between 5 and 7 Å. This axis length should be determined by X-ray diffraction. Typical values for such axis are described for different zeolites in Zeolites 17:1-230, 1996 page 9.

Examples of zeolites, which can be used in the present invention having the above properties, are zeolites of the OFF Type and MTW type zeolites. Both these 12-oxygen ring zeolites have CI value's of above 1 and more preferably above 1.5. Examples of OFF type zeolites are Linde T, LZ-217 and TMA-O. Reference is also made to US-A-4503023 describing an OFF Type zeolite. More preferably MTW type zeolites are used. This class of zeolites includes ZSM-12 as described in US-A-3,832,449, CZH-5 as described in GB-A-2079735, Gallosilicate MTW as described in Y.X. Zhi, A. Tuel, Y. Bentaarit and C. Naccache, Zeolites 12, 138 (1992), Nu-13(5) as described in EP-A-59059, Theta-3 as described in EP-A-162719, TPZ-12 as described in US-A-4557919 and VS-12 as described in K. M. Reddy, I. Moudrakovski and A. Sayari, J. Chem. Soc., Chem. Commun. 1994, 1491 (1994)

The average crystal size of the zeolite is preferably smaller than 0.5 µm and more preferably smaller than 0.1 µm as determined by the well-known X-ray diffraction (XRD) line broadening technique using the high intensity peak at about 20.9 2-theta in the XRD diffraction pattern.

The binder in the catalyst may be any binder usually used for such an application. A possible binder includes alumina or alumina containing binders. Applicants have found that low acidity refractory oxide binder material that is essentially free of alumina provides more improved catalyst. Examples are low acidity refractory oxides such as silica, zirconia, titanium dioxide, germanium dioxide, boria and mixtures of two or more of these. The most preferred binder is silica. The weight ratio of the molecular sieve and the binder can be anywhere between 5:95 and 95:5. Lower zeolite content, suitable between 5 and 35 wt%, may in some cases be advantageous for achieving an even higher selectivity.

The silica to alumina molar ratio of the zeolite prior to dealumination is preferably larger than 50 and more preferably between 70 and 250 and most preferably between 70 and 150. Preferably the zeolite has been subjected to a dealumination treatment. The dealumination of the zeolite results in a reduction of the number of alumina moieties present in the zeolite and hence in a reduction of the mole percentage of alumina. The expression "alumina moiety" as used in this connection refers to an Al₂O₃-unit which is part of the framework of the aluminosilicate zeolite, i.e. which has been incorporated via covalent bindings with other oxide moieties, such as silica (SiO₂) in the framework of the zeolite. The mole percentage of alumina present in the aluminosilicate zeolite is defined as the percentage of moles Al₂O₃ relative to the total number of moles of oxides constituting the aluminosilicate zeolite (prior to dealumination) or modified molecular sieve (after dealumination). Preferably dealumination is performed such that the reduction in alumina moieties in the framework is between 0.1 and 20%.

Dealumination may be performed by means of steaming. Preferably the surface of the zeolite crystallites are selectively dealuminated. A selective surface dealumination results in a reduction of the number of surface acid sites of the zeolite crystallites, whilst not affecting the internal structure of the zeolite crystallites. When applying a surface dealumination the reduction of alumina moieties in the framework will be lower and preferably between 0.1 and 10%. Dealumination using steam results is a typical non-selective dealumination technique.

Dealumination can be attained by methods known in the art. Particularly useful methods are those, wherein the dealumination selectively occurs, or anyhow is claimed to occur selectively, at the surface of the crystallites of the molecular sieve. Examples of dealumination processes are described in WO-A-9641849. US-A-5015361 describes a method wherein the zeolites are contacted with sterically hindered amine compound.

Preferably dealumination is performed by a process in which the zeolite is contacted with an aqueous solution of a fluorosilicate salt wherein the fluorosilicate salt is represented by the formula:

(A)₂/bSiF₆

wherein 'A' is a metallic or non-metallic cation other than H⁺ having the valence 'b'. Examples of cations 'b' are alkylammonium, NH₄⁺, Mg⁺⁺, Li⁺, Na⁺, K⁺, Ba⁺+, Cd⁺⁺, Cu⁺, Ca⁺⁺, Cs⁺, Fe⁺⁺, Co⁺⁺, Pb⁺⁺, Mn⁺⁺, Rb⁺, Ag⁺, Sr⁺⁺, T1⁺, and Zn⁺⁺. Preferably 'A' is the ammonium cation. The zeolite material may be contacted with the fluorosilicate salt at a pH of suitably between 3 and 7. Such a dealumination process is for example described in US-A-5157191. The dealumination treatment is also referred to as the AHS-treatment.

The catalyst composition is preferably prepared by first extruding the zeolite with the low acidity binder and subsequently subjecting the extrudate to a dealumination treatment, preferably the AHS treatment as described above. It has been found that an increased mechanical strength of the catalyst extrudate is obtained when prepared according to this sequence of steps.

It is believed that by maintaining the acidity of the catalyst at a low level conversion to products boiling outside the lube boiling range is reduced. Applicants found that the catalyst should have an alpha value below 50 prior to metals addition, preferably below 30, and more preferably below 10. The alpha value is an approximate indication of the catalytic cracking activity of the catalyst compared to a standard catalyst. The alpha test gives the relative rate constant (rate of normal hexane conversion per volume of catalyst per unit time) of the test catalyst relative to the standard catalyst which is taken as an alpha of 1 (Rate Constant=0.016 sec -1). The alpha test is described in U.S. Pat. No. 3,354,078 and in J. Catalysis, 4, 527 (1965); 6, 278 (1966); and 61, 395 (1980), to which reference is made for a description of the test. The experimental conditions of the test used to determine the alpha values referred to in this specification include a constant temperature of 538 °C. and a variable flow rate as described in detail in J. Catalysis, 61, 395 (1980).

The hydrogenation component suitably comprises at least one Group VIB metal component and/or at least one Group VIII metal component. Group VIB metal components include tungsten, molybdenum and/or chromium as sulphide, oxide and/or in elemental form. If present, a Group VIB metal component is suitably present in an amount of from 1 to 35% by weight, more suitably from 5 to 30% by weight, calculated as element and based on total weight of support, i.e. modified molecular sieve plus binder. Group VIII metal components include those components based on both noble and non-noble metals. Particularly suitable Group VIII metal components, accordingly, are palladium, platinum, nickel and/or cobalt in sulphidic, oxidic and/or elemental form. Nickel and/or cobalt, if present at all, may be present in an amount in the range of from 1 to 25% by weight, preferably 2 to 15% by weight, calculated as element and based on total weight of support. The total amount platinum or palladium will suitably not exceed 10% by weight calculated as element and based on total weight of support, and preferably is in the range of from 0.1 to 5.0% by weight, more preferably from 0.2 to 3.0% by weight. If both platinum and palladium are present, the weight ratio of platinum to palladium may vary within wide limits, but suitably is in the range of from 0.05 to 10, more suitably 0.1 to 5. Catalysts comprising palladium and/or platinum as the hydrogenation component are preferred. Most preferred is when platinum is used as the sole hydrogenation component. The hydrogenation component is suitably added to the catalyst extrudate comprising the dealuminated aluminosilicate zeolite crystallites by known techniques.

Catalytic dewaxing involve operating temperatures in the range of from 200 to 500 °C, preferably from 250 to 400 °C, hydrogen pressures in the range of from 10 to 200 bar, preferably from 30 to 150 bar, more preferably from 40 to 60 bar. The weight hourly space velocities (WHSV) in the range of from 0.1 to 10 kg of oil per litre of catalyst per hour (kg/l/hr), preferably from 0.2 to 5 kg/l/hr, more preferably from 0.5 to 3 kg/l/hr and hydrogen to oil ratios in the range of from 100 to 2,000 litres of hydrogen per litre of oil.

The base oil as obtained in the process according to the invention may be used as such or may be separated into two or more different base oil grades. In a suitable embodiment it is possible to simultaneously prepare the following base oil grades, (i) base oils having a kinematic viscosity at 100 °C (vK @ 100) of between about 2 and 4 cSt, (ii) base oils of vK @ 100 between about 2 and 15 cSt and/or (iii) base oils having a vK @ 100 of above 15 cSt. Optionally the heavy fraction may be recycled to the dewaxing step according to the invention to optimise the yield to the lower viscous base oil grades. The pour point of the base oils may suitably be below -10 °C, preferably below -20 °C, more preferably below -27 °C. Base oils having a pour points as low as - 60 °C may be prepared by the process according to this invention. The viscosity index of the base oils is preferably above 120 and more preferably between 120 and 160.

The invention will be illustrated by the following non-limiting examples.

### Preparation of the catalyst

MTW Type zeolite crystallites were prepared as described in "Verified synthesis of zeolitic materials" as published in Micropores and mesopores materials, volume 22 (1998), pages 644-645 using tetra ethyl ammonium bromide as the template. The SEM visual observed particle size showed ZSM-12 particles of between 1 and 10 µm. The average crystallite size as determined by XRD line broadening technique as described above was 0.05 µm. The crystallites thus obtained were extruded with a silica binder (10% by weight of zeolite, 90% by weight of silica binder). The extrudates were dried at 120 °C. A solution of (NH₄)₂SiF₆ (45 ml of 0.019 N solution per gram of zeolite crystallites) was poured onto the extrudates. The mixture was then heated at 100 °C under reflux for 17 h with gentle stirring above the extrudates. After filtration, the extrudates were washed twice with deionised water, dried for 2 hours at 120 °C and then calcined for 2 hours at 480 °C.

The thus obtained extrudate was impregnated with an aqueous solution of platinum tetramine hydroxide followed by drying (2 hours at 120 °C) and calcining (2 hours at 300 °C). The catalyst was activated by reduction of the platinum under a hydrogen rate of 100 l/hr at a temperature of 350 °C for 2 hours. The resulting catalyst comprised 0.35% by weight Pt supported on the dealuminated, silica-bound MTW zeolite.

### Example 1

A slack wax having the properties as listed in Table 1 was contacted in the presence of hydrogen with the above-described catalyst at an outlet pressure of 140 bar, a WHSV of 1.0 kg/l.hr and a hydrogen gas rate of 1500 Nl/kg at various temperatures ranging between 350 and 400 °C. The temperature was varied in order to make different qualities of base oil, wherein the lowest pour point base oils were obtained at the most severe temperature conditions.

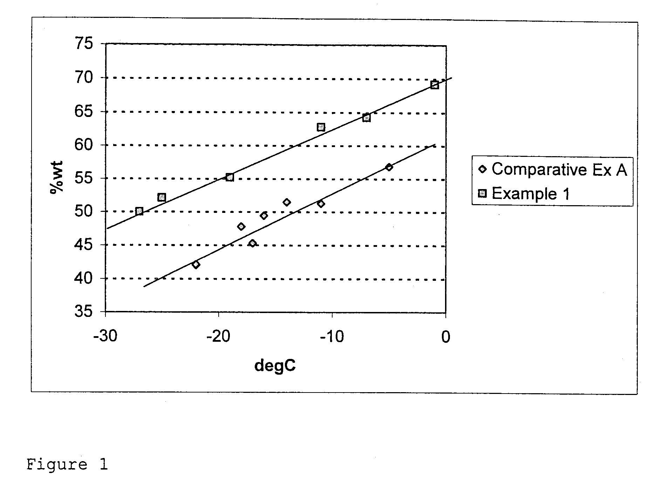

Light components were separated from the effluent by vacuum flashing at a cutting temperature of 390 °C. The oil yield as a function of the achieved pour point of the oil fraction (390 °C⁺ fraction) is given in Figure 1.

**Table 1**

| Slack wax properties | | | |
|---|---|---|---|
| Density at 70 °C | 816.3 kg/m³ | Simulated distillation: | |
| Sulphur , ppm | 10 | Initial Boiling Point | 368 °C |
| Nitrogen, ppm | <1 | 5 wt% point | 418 °C |
| Pour point | >30 °C | 50 wt% point | 492 °C |
| Kinematic viscosity at 100 °C | 7.449 mm²/s | 95 wt% point | 557 °C |
| Oil content | 42.4 wt%(*) | Final Boiling Point | 620 °C |

| | | | |
|---|---|---|---|
| (*) as measured by solvent dewaxing at -27 °C | | | |

### Comparative Experiment A

Example 1 was repeated except that the catalyst contained a MTT Type instead of the MTW Type zeolite of Example 1. The oil yield as a function of the achieved pour point of the oil fraction (390 °C⁺ fraction) is given in Figure 1.

As can be seen in Figure 1 a higher oil yield is achieved when the process according to the invention is used as compared to when a state of the art MTT Type based catalyst is used.

Also significantly higher gas oil yields are obtained in Example 1 as compared to Experiment A as illustrated by the results that were obtained at a pour point of - 11 °C and which are presented in Table 2.

**Table 2**

| | Example 1 | Comparative Experiment A |
|---|---|---|
| Zeolite | MTW | MTT |
| Chanels¹ | [010] 12 5.5*5.9 | [001] 10 4.5*5.2 |
| Base oil yield (390 °C+; wt%) | 62.8 | 51.3 |
| Base oil pour point (°C) | -11 | -11 |
| Gas oil yield (220-390 °C; wt%) | 20.9 | 8.8 |
| Kerosene yield (140-220 °C; wt%) | 5.6 | 2.9 |
| Naphtha minus yield (140 °C and below; wt%) | 10.7 | 37 |

| | | |
|---|---|---|
| ¹ From 'Atlas of zeolite structure types', 4^{th} rev. ed./W.M. Meier, D.H. Olson, and Ch. CH. Baerlocher, ISBN 0-444-10015-6 | | |

## Claims

1. Process for preparing a lubricating base oil and a gas oil by contacting, under catalytic dewaxing conditions, a petroleum derived wax with a catalyst composition comprising at least a hydrogenation component, a binder and zeolite crystallites having pores consisting of 12 oxygen atoms, wherein the zeolite crystallites have a constrain index (CI) larger than 1 and wherein from the effluent of the process a base oil fraction and a gas oil fraction is isolated and wherein the gas oil yield is larger than the yield to the fraction boiling below the gas oil fraction.

2. Process according to claim 1, wherein the wax feed has an oil content of between 0 and 50 wt%.

3. Process according to claim 2, wherein the wax feed has an oil content of between 0 and 20 wt%.

4. Process according to any one of claims 1-3, wherein the wax feed is a slack wax or a foots oil.

5. Process according to any one of claims 1-4, wherein the wax feed contains less than 10 ppmw organic nitrogen.

6. Process according to any one of claims 1-5, wherein the zeolite crystallites have a constrain index (CI) larger than 1.5.

7. Process according to any one of claims 1-6, wherein the zeolite crystallites have a constrain index (CI) smaller than 7.

8. Process according to any one of claims 1-7, wherein the zeolite is of the OFF or MTW type.

9. Process according to any one of claims 1-8, wherein the zeolite content is in the range of from 5 to 35 wt%.

10. Process according to any one of claims 1-9, wherein the binder is silica.
